# EUROPEAN PATENT APPLICATION

(11) **EP 4 108 425 A1**
(43) Date of publication of application: **28.12.2022**
(21) Application number: 22179810.1
(22) Date of filing: 20.06.2022
(51) Int. Cl.: B29C 65/02, B29C 65/48, B29C 65/56, B29C 65/66, A47G 21/18, B29C 57/04, B29D 23/00

(54) **METHOD AND STRAW MAKING MACHINE FOR PRODUCING DRINKING STRAWS**

(30) Priority: 24.06.2021 EP 21181356
(71) Applicant: Tetra Laval Holdings & Finance S.A., 1009 Pully (CH)
(72) Inventor: BERTANI, Giulio, 41012 Carpi (IT); MARTINI, Pietro, 43122 Parma (IT); DAMKJAER, Niels, 24441 Kävlinge (SE)
(74) Representative: Tetra Pak - Patent Attorneys SE

(57) **Abstract**

There is described a method of producing a drinking straw (1) for a package being filled with a pourable food product. The method comprises at least the steps of providing a tubular main body (4', 4a, 4b) and an auxiliary tube (20) comprising at least a first end portion (21) having a first opening and a receiving portion (22) connected to the first end portion (21); distancing the tubular main body (4', 4a, 4b) and the auxiliary tube (20) from one another; forming, during which an active portion (23) of an enlargement tool (24) is inserted through the first opening into the auxiliary tube (20) such to enlarge and shape the first end portion (21); removing the active portion (23) from the auxiliary tube (20); guiding a coupling portion (5') of the tubular main body (4', 4a, 4b) into the receiving portion (22) of the auxiliary tube (20); and joining the receiving portion (22) of the auxiliary tube (20) onto the coupling portion (5') of the tubular main body (4').

## Description

### TECHNICAL FIELD

The present invention relates to a method for producing drinking straws, in particular drinking straws for a package filled with a pourable food product.

The present invention also relates to a straw making machine for producing drinking straws, in particular drinking straws for a package filled with a pourable food product.

### BACKGROUND ART

As is known, many liquid or pourable food products, such as fruit juice, UHT (ultra-high-temperature treated) milk, wine, tomato sauce, etc., are sold in packages made of sterilized packaging material.

A typical example is the parallelepiped-shaped package for pourable food products known as Tetra Brik Aseptic (registered trademark), which is made by sealing and folding a laminated strip packaging material. The packaging material has a multilayer structure comprising a carton and/or paper base layer, covered on both sides with layers of heat-seal plastic material, e.g. polyethylene. In the case of aseptic packages for long-storage products, the packaging material also comprises a layer of oxygen-barrier material, e.g. an aluminum foil, which is superimposed on a layer of heat-seal plastic material, and is in turn covered with another layer of heat-seal plastic material forming the inner face of the package eventually contacting the food product.

There are known packages comprising a package main body formed from the multilayer packaging material and a drinking straw. Those packages are in particular used for the consumption on-the-go.

The main package body comprises a main opening configured to allow the insertion of the drinking straw into the main package body. The package main body also comprises a separation membrane covering the main opening for separating the inner space of the package main body from an outer environment and which is configured to be pierced by the drinking straw so as to allow the introduction of the drinking straw through the main opening and into the package and the subsequent extraction of the pourable food product through the drinking straw.

Each drinking straw is typically attached to the respective package main body within a closed plastic envelope. Prior to its use a consumer extracts the respective drinking straw from the envelope and introduces the drinking straw into the package by piercing the separation membrane.

A drawback of these packages is that the drinking straws may be littered independently and voluntarily or involuntarily from the package main body after the complete or partial consumption of the pourable food product.

The document EP-A-3692866 of the Applicant discloses a solution to such a problem by providing a drinking straw having a main tubular main body and a sleeve fitted on the main tubular main body. The drinking straw comprises a tip configured to pierce the separation membrane.

The sleeve is provided with an abutment portion formed by means of a thickening or by means of a palm-leaf structure, which is configured to allow for the insertion of the drinking straw into the package main body, but which guarantees to abut against an inner surface of the package main body during an attempt to remove the drinking straw and thereby to hinder the removal of the drinking straw.

A drawback of such described drinking straws is that the production of these find limits when desiring to further accelerate the production of such drinking straws.

Therefore, a desire is felt in the sector to improve the method of producing drinking straws having an abutment portion so that their production can be realized in an easier and faster manner than the ones known in the art.

### DISCLOSURE OF INVENTION

It is therefore an object of the present invention to provide in a straightforward and low-cost manner an improved method solving the above-mentioned drawback.

It is a further object of the present invention to provide in a straightforward and low-cost manner an improved straw making machine solving the above-mentioned drawback.

According to the present invention, there is provided a method according to the independent claim.

Further advantageous embodiments of the method are specified in the claims being dependent on the independent claim.

Furthermore, there is provided a straw making machine according to claim 16.

### BRIEF DESCRIPTION OF THE DRAWINGS

A non-limiting embodiment of the present invention will be described by way of example with reference to the accompanying drawings, in which:
Figure 1 is a perspective view of a drinking straw produced with the method according to the present invention, with parts removed for clarity;
Figure 2 is a schematic view of a method for the production of a drinking straw according to a first embodiment of the present invention; and
Figure 3 is a schematic view of a method for the production of a drinking straw according to a second embodiment of the present invention.

### DETAILED DESCRIPTION OF THE EMBODIMENTS

Reference numeral 1 indicates as a whole a possible non-limiting embodiment of a drinking straw, in particular the drinking straw 1 to be used together with a package main body, preferentially a package main body formed from a multilayer packaging material.

Drinking straw 1 may define together with the package main body a package. Such a package may also comprise an envelope or a pocket for housing the drinking straw 1 prior to its use.

The package main body may be filled with a pourable food product, such as water, milk, milk-based drinks, yoghurt drinks, coffee-based drinks, fruit juice, beverages with pulp or other beverages.

The package main body may be obtained from a multilayer packaging material. In particular, the multilayer packaging material may comprise at least a layer of fibrous material, such as e.g. paper or cardboard, and at least two layers of heat-seal plastic material, e.g. polyethylene, interposing the layer of fibrous material in between one another.

Moreover, the multilayer packaging material may also comprise a layer of gas- and light-barrier material, e.g. aluminum foil or ethylene vinyl alcohol (EVOH) film, in particular being arranged between one of the layers of heat-seal plastic material and the layer of fibrous material. Preferentially, the multilayer packaging material may also comprise a further layer of heat-seal plastic material being interposed between the layer of gas- and light-barrier material and the layer of fibrous material.

Moreover, the package main body may comprise a main opening allowing for the insertion and/or introduction of drinking straw 1 into the package main body. The package main body may also comprise a separation membrane covering the main opening and being configured to be pierced (equivalently ruptured and/or opened and/or cut) by drinking straw 1, so as to allow the insertion of drinking straw 1 (through the main opening) into the package main body.

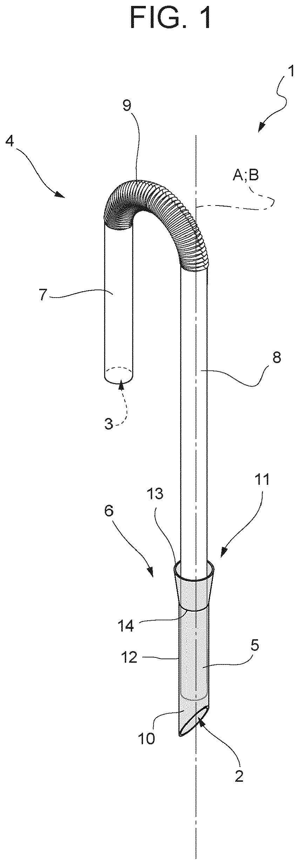

With particular reference to Figure 1, drinking straw 1 may comprise at least:
- an inner flow channel for the pourable food product;
- an inlet opening 2 allowing for the inlet of the pourable food product into drinking straw 1 and the inner flow channel; and
- an outlet opening 3 allowing for the outflow of the pourable food product from drinking straw 1 and the inner flow channel.

In particular, the inner flow channel may extend between inlet opening 2 and outlet opening 3.

Furthermore, inlet opening 2 and outlet opening 3 may be arranged at opposite ends of drinking straw 1.

Inlet opening 2 may be configured to allow for the introduction of the pourable food product into drinking straw 1 and outlet opening 3 may be configured to allow for the outflow of the pourable food product from drinking straw 1 (i.e., in use, a consumer receives the pourable food product through outlet opening 3).

Preferentially, drinking straw 1 comprises or consists or is formed from a polymer and/or a fibrous material.

More specifically, drinking straw 1 comprises:
- a tubular main body 4 including a coupling portion 5 extending along a central axis A; and
- a sleeve 6, in particular extending along a central axis B (parallel, in particular coaxial, to central axis A) fitted on and surrounding at least coupling portion 5.

Preferably, the tubular main body 4 and the sleeve 6 may comprise or may be made of plastic or fiber-based material.

More specifically, tubular main body 4 and sleeve 6 may delimit the inner flow channel.

In more detail, tubular main body 4 may comprise:
- a mouthpiece 7, having and/or carrying outlet opening 3; and
- a main tubular portion 8 connected to coupling portion 5 and being interposed between coupling portion 5 and mouthpiece 7.

In particular, mouthpiece 7 may define a first end of tubular main body 4, and in particular also of drinking straw 1. The first end may have outlet opening 3.

Mouthpiece 7 may present a cylindrical shape.

Moreover, tubular main body 4 may also comprise a second end (fluidically) opposite to the first end. In particular, coupling portion 5 may comprise the second end of tubular main body 4.

Moreover, tubular main body 4 may also comprise a bellow 9 interposed between, in particular also connected to, mouthpiece 7 and tubular main portion 8.

Preferentially, bellow 9 may be configured to allow for a relative movement between mouthpiece 7 and tubular main portion 19. In particular, bellow 9 may allow a consumer to arrange mouthpiece 7 according to the consumer's needs and/or preferences.

Preferentially, both main tubular portion 8 and coupling portion 5 may extend along central axis A.

In more detail, main tubular portion 8 and coupling portion 5 may present respective hollow cylindrical shapes, in particular having respective circular cross-sectional profiles with respect to a cross-sectional plane perpendicular to central axis A. In particular, the respective circular cross-sectional profiles equal one another.

Preferentially, tubular main body 4, in particular coupling portion 5, tubular main portion 8, mouthpiece 7 and bellow 9, may be formed in a single piece.

Furthermore, drinking straw 1 may comprise a tip section 10 configured to pierce, in use, the separation membrane. Tip section 10 may be wedge-shaped.

With particular reference to Figure 1, sleeve 6 may comprise an end portion having inlet opening 2. In particular, the end portion may have and/or define tip section 10.

More specifically, coupling portion 5 does not comprise inlet opening 2 (and tip section 10). In other words, coupling portion 5 is spaced apart from inlet opening 2 (and tip section 10).

In even other words, coupling portion 5 does not extend through all of sleeve 6.

Furthermore, sleeve 6 comprises an abutment portion 11 configured to allow the partial insertion of drinking straw 1 (by passing through the main opening) into the package main body, and to impede and/or hinder and/or block the removal and/or separation of drinking straw 1 from the package main body after the partial insertion of drinking straw 1 into the package main body 1.

In particular, during a partial insertion of drinking straw 1, at least sleeve 6 and coupling portion 5 (fully) enter the package main body. Furthermore, also at least a section (namely, a portion) of tubular main portion 8 may enter the package main body. In particular, the extension of the section of tubular main portion 8 being present within the package main body may vary.

In more detail, sleeve 6 together with coupling portion 5 is configured to be inserted into the package main body through the main opening, thereby piercing the separation membrane.

In more detail, abutment portion 11 is configured to abut onto an inner surface of the package main body during a movement of the partially inserted drinking straw 1, in particular of at least sleeve 6 and coupling portion 5, out of the package main body for impeding and/or hindering and/or blocking separation and/or removal of drinking straw 1 from the package main body.

In particular, sleeve 6 as a whole and abutment portion 11 are configured to pass through the main opening during the insertion of drinking straw 1 into the package main body and abutment portion 11 is furthermore configured to impede and/or hinder and/or block the extraction of sleeve 6 and therewith of drinking straw 1 out of the package main body.

It should be noted that sleeve 6 is fitted onto coupling portion 5 in a non-removable manner. In this way, it is guaranteed that tubular main body 4 cannot be separated from sleeve 6.

Preferentially, sleeve 6 may be non-removably fitted onto coupling portion by means of mechanical friction, gluing, (solvent) bonding, welding (e.g. ultrasonic, hot plate or laser welding), mechanical deformation (e.g. cold forming or hot forming (infrared heating, induction heating, flow of heated gas)).

In more detail, sleeve 6 may also comprise an engagement portion 12 fitted to and surrounding coupling portion 5. In particular, an inner surface of engagement portion 12 is fitted and fixed onto an outer surface of coupling portion 5. In particular, engagement portion 12 may have a hollow cylindrical shape.

Preferentially, abutment portion 11 may be connected to, and in particular extends from a first terminal section of, engagement portion 12.

Additionally, also the end portion of sleeve 6, in particular tip section 10, may be connected to engagement portion 12, and in particular may extend from a second terminal section of engagement portion 12 opposed to the first terminal section.

In other words, engagement portion 12 may be interposed between abutment portion 11 and the end portion of sleeve 6.

Preferentially, the end portion, in particular tip section 10, is not in contact and/or is not fitted onto coupling portion 5 of the tubular main body 4.

In other words, coupling portion 5 of the tubular main body 4 may be surrounded by only engagement portion 12, but not the end portion of sleeve 6.

Moreover, the second end of tubular main body 4, in particular of coupling portion 5, may be interposed between abutment portion 11 and inlet opening 2.

With reference to Figure 1, abutment portion 11 is enlarged with respect to engagement portion 12.

According to the specific example shown, abutment portion 11 may have a frustoconical shape. Alternatively, abutment portion 11 may have other shapes.

The solution of abutment portion 11 having a frustoconical shape is particular advantageous, as on the one side it allows to partially insert drinking straw 1 together with sleeve 6 into the package main body, to block drinking straw 1 in an inseparable manner within the package main body and on the other side and, as will be explained in further detail in the following, sleeve 6 having such a frustoconical-shaped abutment portion 11 can be easily and quickly produced.

E.g. with abutment portion 11 having a frustoconical shape one guarantees that abutment portion 11 deflects in a controlled manner during insertion of drinking straw 1 into main package body.

Preferentially, abutment portion 11 may be detached from and may surround a section of tubular main portion 8, in particular the section being connected to coupling portion 5.

According to some preferred non-limiting embodiments, abutment portion 11 may taper from a first profile 13 to a second profile 14. In particular, the first profile 13 being more distant to inlet opening 2 than the second profile 14. In particular, second profile 14 is connected to engagement portion 12.

Preferentially, the first profile 13 may define an opening and may have a first extension or a first diameter which may be larger than respectively a second extension or a second diameter of the second profile 14.

In particular, first profile 13 may be configured to abut against the inner surface of the package main body for ensuring that drinking straw 1 is retained within the package main body once drinking straw 1 has been partially inserted into the package main body.

Furthermore, abutment portion 11 may taper towards and to engagement portion 12.

Preferentially, a wall thickness of engagement portion 12 may be (substantially) equal to or (slightly) larger than a wall thickness of abutment portion 11.

Additionally, also a wall thickness of the end portion of sleeve 6 and/or tip section 11 may be (substantially) equal to or (slightly) larger than the wall thickness of abutment portion 11.

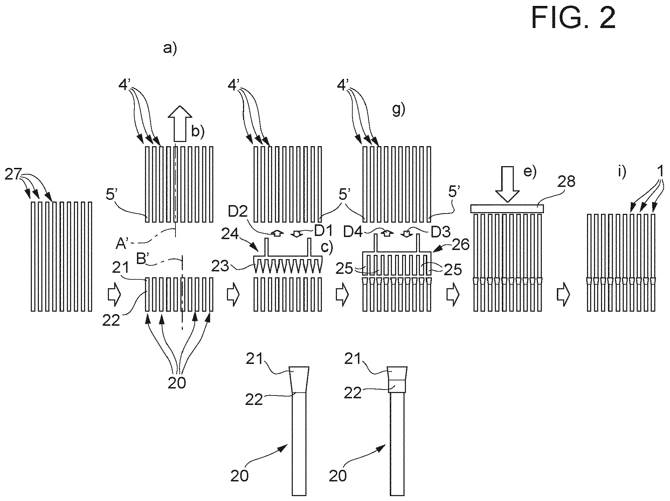

Figure 2 schematically shows a first embodiment of a method for the production of drinking straws 1 being provided with respective sleeves 6 having abutment portions 11, which permit the partial introduction of drinking straws 1 into the respective package main bodies and to guarantee that the respective drinking straws 1 are retained in the respective package main bodies.

Such a method can be executed by an automatically operating straw making machine.

The method shown in Figure 2 comprises at least the steps of:
a) providing a tubular main body 4' and an auxiliary tube 20 comprising at least a first end portion 21 having a first opening and a receiving portion 22 connected to first end portion 21;
b) distancing tubular main body 4' and auxiliary tube 20 from one another;
c) forming, during which an active portion 23 of an enlargement tool 24 is inserted through the first opening into auxiliary tube 20 such to enlarge and shape first end portion 21, in particular thereby forming what defines abutment portion 11 of sleeve 6; and
d) removing active portion 23 and/or enlargement tool 24 as a hole from auxiliary tube 20;
e) guiding a coupling portion 5' of the tubular main body 4' into the receiving portion 22 of auxiliary tube 20; and
f) joining the receiving portion 22 of auxiliary tube 20 onto coupling portion 5' of tubular main body 4'.

In particular, auxiliary tube 20 defines a precursor of sleeve 6. Moreover, the receiving portion 22 and the first end portion 21 of the auxiliary tube 20 define, respectively, the engagement portion 12 and the abutment portion 11 of the sleeve 6 once the production of drinking straw 1 has been terminated.

Additionally, tubular main body 4' defines a precursor of tubular main body 4. In particular, coupling portion 5' defines coupling portion 5. Preferentially, tubular main body 4' comprises already all the portions of tubular main body 4, in particular tubular main portion 8, coupling portion 5, mouthpiece 7 and even more preferentially also bellow 9.

According to the example shown in Figure 2, the steps c) to f) may be executed in order of their mentioning; i.e. step c) is executed prior to step d), which again is executed prior to step e), which is executed prior to step f).

Furthermore, steps a) and b) are executed prior to the execution of step c).

Steps a) and b) may be executed simultaneously or one after the other. Steps a) and b) may also include the possibility of providing tubular main body 4' and auxiliary tube 20 already being distanced from one another.

According to a preferred non-limiting embodiment, during step a) a group of two or more tubular main bodies 4' and their respective auxiliary tubes 20 may be provided. Advantageously, the respective tubular main bodies 4' and the respective auxiliary tubes 20 of one group are subjected to the respective steps b) to f) simultaneously.

E.g. enlargement tool 24 may comprise a plurality of active portions 23, each one configured to form one respective first end portion 21 of one respective auxiliary tube 20 during execution of step c).

Moreover, each active portion 23 may have a frustoconical or conical shape so as to define a frustoconical shape of first end(s) 21.

Preferentially, the step c) and step d) may be executed at a forming station.

In particular, the straw making machine comprises enlargement tool 24, even more in particular being arranged at the forming station.

In the following, we describe the formation of a single drinking straw 1, but it can be understood that the concepts disclosed are also applicable to the simultaneous execution of steps a) to f) and the eventually further steps associated with the production of drinking straws 1 from one respective group of tubular main bodies 4' and auxiliary tubes 20.

Moreover, each tubular main body 4' and each auxiliary tube 20 may extend along respective longitudinal and/or central axes A' and B'.

Preferentially, each tubular main body 4' and each auxiliary tube 20 may present hollow (substantially) circular cross-sectional shapes (with respect to relative cross-sectional planes perpendicular to respectively axis A' and axis B').

Additionally, a thickness of a wall of tubular main body 4' is (substantially) equal or larger than a thickness of a wall of auxiliary tube 20.

Preferentially, during step c) active portion 23 is heated.

More specifically, during execution of step c) active portion 23 is moved into a first direction D1 parallel to longitudinal axis B' and during the execution of step d), active portion 23 is moved into a second direction D2 parallel to longitudinal axis B' and opposed to first direction D1.

Preferably, during step c), a central axis of the active portion 23 (along which active portion 23 extends) is maintained parallel (in particular, coaxial) to the longitudinal axis B'.

In the case of the simultaneous enlargement of more than one first end portion 21, each active portion 23 is moved into first direction D1 or second direction D2 simultaneously with the other active portions 23.

Alternatively or in addition, during execution of step c), auxiliary tube 20 may be moved into second direction D2 and/or during execution of step d) auxiliary tube 20 may be moved into first direction D1.

In more detail, during execution of step f) each receiving portion 22 and the respective coupling portion 5' are force-fitted and/or bonded (e.g. by means of solvent bonding) and/or glued and/or welded (e.g. ultrasonic, hot plate or laser welding) and/or subjected to mechanical deformation (e.g. cold forming or hot forming (infrared heating, induction heating, flow of heated gas)) and/or each receiving portion 22 is heat-shrunk onto the respective coupling portion 5'.

Furthermore, the method may also comprise g) a step of widening, during which receiving portion 22 is widened. By widening receiving portion 22 one facilitates the insertion of coupling portion 5' into receiving portion 22. Preferentially, during the step f) receiving portion 22 is subjected to a heat treatment for inducing a shrinking of receiving portion 22.

In more detail, during execution of step g) an active section 25 of a widening tool 26 is introduced into auxiliary tube 20, in particular through the first opening. In particular, active section 25 is heated during execution of step g).

More specifically, during execution of step g) active section 25 may be moved along a third direction D3 parallel to longitudinal axis B'. Preferably, during step g), a central axis of the active section 25 (along which the active section 25 extends) may be maintained parallel (in particular, coaxial) to the longitudinal axis B'. Afterwards, active section 25 is removed from receiving section 22 by moving active section 25 into a fourth direction D4 parallel to longitudinal axis B' and opposed to third direction D3.

In the case of the simultaneous widening of more than one receiving portion 22, preferentially each active section 25 is moved along third direction D3 or fourth direction D4 simultaneously with the other active sections 25.

Alternatively or in addition, during execution of step g), auxiliary tube 20 may be moved along fourth direction D4 and/or during the removal of active section 25 auxiliary tube 20 may be moved along third direction D3.

Preferentially, each active section 25 may be cylindrically shaped. In particular, each active section 25 may be designed such that the active section 25 widens the receiving portion 22 in a manner that coupling portion 5' can be easily inserted into receiving portion 22.

Preferentially, each active section 25 may have an outer diameter being (substantially) equal or (slightly) larger than an outer diameter of coupling portion 5'.

Preferentially, the step g) may be executed at a widening station.

In particular, the straw making machine may comprise widening tool 26, even more particular being arranged at the widening station.

According to some preferred non-limiting embodiments, step g) may be executed after or before step c). Most preferably, step g) is executed after step c).

Alternatively, step g) and step c) could be executed simultaneously. According to such an embodiment, enlargement tool 24 and widening tool 26 may be realized in a single tool having the respective active portion 23 (for enlarging and shaping the first end portions 21) and the respective active section 25 (for widening the receiving portion 22).

The Applicant has found out that the precision of the formation of the drinking straw 1 is improved when separating step c) and step g). Nevertheless, the simultaneous execution of such steps c) and g) is advantageous in terms of speed of straw production.

In more detail, during execution of step b), each tubular main body 4' and the respective auxiliary tube 20 may be distanced from one another along an axis coaxial to longitudinal axis A' and longitudinal axis B'.

According to a preferred non-limiting embodiment, the step a) may comprise the sub-steps of:
a1) feeding, e.g. by means of a conveying drum and/or a belt conveyor, one or more main tubes 27 to a cutting station; and
a2) cutting the one or more main tubes 27 at the cutting station for obtaining the respective one or more tubular main bodies 4' and the respective one or more auxiliary tubes 20.

In more detail, during the step a1), a conveying drum rotating around a rotation axis, feeds the one or more main tubes 27 onto a belt conveyor and the belt conveyor further advances the one or more main tubes 27.

In particular, the straw making machine may comprise a feeding apparatus, in particular having the feeding drum and/or a portion of the belt conveyor.

Furthermore, the straw making machine may comprise a cutting device for cutting main tubes 27. In particular, the cutting device may comprise at least one knife.

Furthermore, during execution of step a2) at least one knife cuts the one or more main tube 27. In particular, one knife may (simultaneously) cut a plurality of main tubes 27 and/or the group of main tubes 27.

Additionally, during execution of step b), the at least one knife distances tubular main bodies 4' and the respective auxiliary tubes 20 from one another.

According to such an embodiment, the cutting device also defines a distancing device of the straw making machine. Alternatively, the straw making machine could comprise a distancing device distinct from the cutting device.

In more detail, the step e) may be executed at a guiding station.

Furthermore, during the execution of step e), tubular main body 4' may be moved, in particular by means of a pressing tool 28, along a direction parallel to longitudinal axis A' and longitudinal axis B'.

Alternatively or in addition, auxiliary tube 20 may be moved along a direction parallel to longitudinal axis A' and longitudinal axis B'.

Additionally, the method may also comprise a step h) of advancing, during which tubular main body(ies) 4' and (the respective) auxiliary tube(s) 20 are advanced along an advancement path to and through:
- the forming station;
- the guiding station; and
- the joining station.

In particular, the forming station may be arranged upstream of the guiding station and the guiding station may be arranged upstream of the joining station.

Additionally, during the step h), tubular main body(ies) 4' and (the respective) auxiliary tube(s) 20 may be advanced from the cutting station to the forming station.

Furthermore, during the step h), tubular main body(ies) 4' and (the respective) auxiliary tube(s) 20 may also be advanced to and through the widening station.

Preferentially, the widening station is arranged upstream or downstream from the forming station along the advancement path.

Alternatively, the widening station and the forming station could coincide.

Preferentially, during the step h), tubular main body(ies) 4' and (the respective) auxiliary tube(s) 20 advance along the advancement path into a direction transversal, in particular perpendicular, to longitudinal axis A' and longitudinal axis B'.

The straw making machine may comprise a conveying device for conveying the tubular main body(ies) 4' and (the respective) auxiliary tube(s) 20 along the advancement path. In particular, the conveying device may comprise one or more belt conveyors.

Preferentially, at least a first belt conveyor of the conveying device is configured to advance the tubular main body(ies) 4' and a second belt conveyor of the conveying device is configured to advance the auxiliary tube(s) 20.

According to some preferred non-limiting embodiments, the method may also comprise a step i) of cooling during which a cooling fluid, in particular cooling air, is directed onto auxiliary tube 20 and tubular main body 4' after execution of step f), and in particular at a cooling station; i.e. during step i), the respective drinking straw 1 is cooled.

In particular, the cooling station is arranged downstream of the joining station along the advancement path.

In more detail, during step i) the joining auxiliary tube 20 and tubular main body 4' (i.e. drinking straw 1) advances within a chamber and the cooling fluids flows from an upper portion to a lower portion of the chamber and onto auxiliary tube 20 and tubular main body 4'.

Preferentially, the straw making machine may comprise the chamber and a cooling device for generating the flow of the cooling fluid.

According to some possible embodiments, the method may also comprise a further cutting step during which auxiliary tube 20 is cut so as to form tip section 10.

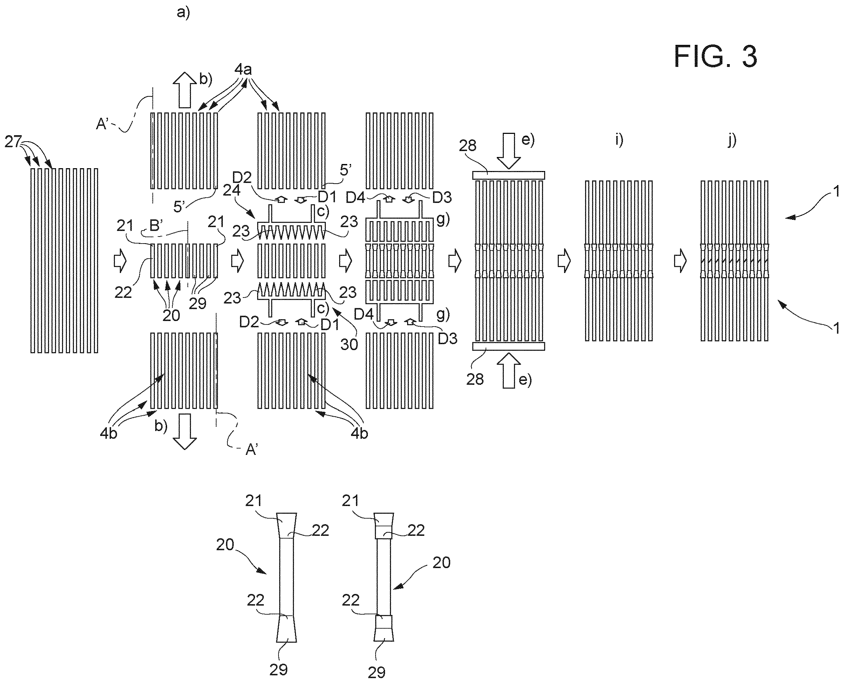

Figure 3 indicates an alternative embodiment of the method according to the present invention. As the method schematically shown in Figure 3 is similar to the method schematically shown in Figure, the following description is limited to the differences between them, and using the same references, where possible, for identical or corresponding parts.

In particular, the method shown in Figure 3 differs from the method shown in Figure 2 in that during the step of cutting, main tube 27 is cut at two distinct positions so as to obtain a first tubular main body 4a, a second tubular main body 4b and auxiliary tube 20. In this embodiment, the cutting device may comprise at least a first knife configured for cutting the main tube(s) 27 at a first position and a second knife configured for cutting the main tube(s) 27 at a second position. Preferably, the first knife and the second knife are operated simultaneously with respect to one another.

In particular, auxiliary tube 20 may be interposed between first tubular main body 4a and second tubular main body 4b.

Preferentially, during the step b), both first tubular main body 4a and second tubular main body 4b are distanced from auxiliary tube 20.

In particular, during step b), first tubular main body 4a is moved along a respective direction parallel to longitudinal axis A' and away from auxiliary tube 20 and second tubular main body 4b is moved along another respective direction parallel to longitudinal axis A'.

Furthermore, auxiliary tube 20 comprises first end portion 21 and a second end portion 29 opposite to first end portion 21 and having a second opening.

During the step c), active portion 23 of a first enlargement tool 24 is inserted through the first opening into auxiliary tube 20 such that first end portion 21 obtains an enlarged shape and the respective active portion 23 of a second enlargement tool 30 is inserted through the second opening into auxiliary tube 20 so that the second end portion 29 obtains an enlarged shape (in a manner similar to the shaping of first end portion).

In particular, active portion(s) 23 of the second enlargement tool 30 are identical to active portion(s) 23 of the first enlargement tool 24. Preferably, active portions 23 of the first enlargement tool 24 and of the second enlargement tool 30 have a conical or frustoconical shape.

Additionally, during the step e), at least coupling portion 5' of first tubular main body 4a and at least coupling portion 5' of second tubular main body 4b are guided into auxiliary tube 20 through respectively the first opening and the second opening.

During the step f), auxiliary tube 20 is joined to first tubular main body 4a and second tubular main body 4b. In more detail, during step f), a respective first receiving portion 22 of auxiliary tube 20 is joined to the respective coupling portion 5' of first tubular main body 4a and a respective second receiving portion 22 of auxiliary tube 20 is joined to the respective coupling portion 5' of second tubular main body 4b.

The method comprises a further step j) of cutting, during which auxiliary tube 20 is cut. In particular, during step j), auxiliary tube 20 may be cut along a cutting line dividing auxiliary tube 20 into two parts (preferably equal to each other). Even more particular, each part defines one respective sleeve 6.

Preferentially, the cutting line is inclined with respect to auxiliary tube 20 so as to form the respective tip sections 10.

Preferentially, the step j) is executed after the step f) and/or after the step i).

One notes that a main difference of the method according to Figure 3 with respect to the one of Figure 2 resides in that auxiliary tube 20 gives rise to the formation of two sleeves 6. Hence, starting from each main tube 27, it is possible to obtain, in a fast manner, a pair of drinking straws 1 (equal to each other).

Preferentially, the straw making machine may also comprise enlargement tool 30.

Furthermore, during the step g), a first active section 25 of widening tool 26 and a second active section 25 of widening tool 26 are introduced into auxiliary tube 20 so as to widen a first receiving portion 22 and a second receiving portion 22 opposed to the first receiving portion 22. In particular, the first receiving portion 22 may be connected to first end portion 21 and the second receiving portion 22 may be connected to second end portion 29.

In particular, during the step g), the first active section 25 of the widening tool 26 is inserted into auxiliary tube 20 through the first opening and the second active section 25 of the widening tool 26 is inserted into auxiliary tube 20 through the second opening, in particular for widening the respective receiving portions 22.

In an alternative embodiment (not shown in the figures), during step g), a single active section 25 of the widening tool 26 is inserted into auxiliary tube 20 through the first opening or the second opening, to uniformly widen the auxiliary tube 20 between the first end portion 21 and the second end portion 29.

In particular, the size of each first active section 25 and of each second active section 25 may be chosen such to widen the respective receiving portions 22 to an inner diameter being (substantially) equal or (slightly) larger than the outer diameter of respectively the coupling portion 5' of first tubular main body 4' and the coupling portion 5' of second tubular main body 4'.

It should be noted that the step i) of cooling may be executed prior or after the step j).

The advantages of the method and/or the straw making machine according to the present invention will be clear from the foregoing description.

In particular, a method is disclosed, which can be quickly executed and which allows production on a large scale.

Clearly, changes may be made to the method and/or the straw making machine as described herein without, however, departing from the scope of protection as defined in the accompanying claims.

## Claims

1. Method of producing a drinking straw (1) for a package being filled with a pourable food product;
the method comprises at least the steps of:
- providing a tubular main body (4', 4a, 4b) and an auxiliary tube (20) comprising at least a first end portion (21) having a first opening and a receiving portion (22) connected to the first end portion (21);
- distancing the tubular main body (4', 4a, 4b) and the auxiliary tube (20) from one another;
- forming, during which an active portion (23) of an enlargement tool (24) is inserted through the first opening into the auxiliary tube (20) such to enlarge and shape the first end portion (21);
- removing the active portion (23) from the auxiliary tube (20);
- guiding a coupling portion (5') of the tubular main body (4', 4a, 4b) into the receiving portion (22) of the auxiliary tube (20); and
- joining the receiving portion (22) of the auxiliary tube (20) onto the coupling portion (5') of the tubular main body (4').

2. Method according to claim 1, wherein, during the step of joining, the receiving portion (22) and the coupling portion (5') are force-fitted and/or bonded and/or glued and/or welded and/or subjected to mechanical deformation and/or the receiving portion (22) is heat-shrunk.

3. Method according to claim 1 or 2, wherein, during the step of forming, the active portion (23) is heated.

4. Method according to any one of the preceding claims, further comprising a step of widening, during which the receiving portion (22) of the auxiliary tube (20) is widened.

5. Method according to claim 4, wherein during the step of widening an active section (25) of a widening tool (26) is introduced into the auxiliary tube (20);
wherein the active section (25) is cylindrically shaped such that the receiving portion (22) is widened to an inner diameter substantially equal to an outer diameter of the coupling portion (5').

6. Method according to claim 4 or 5, wherein during the step of widening the active section (25) is heated.

7. Method according to any one of the preceding claims, wherein the step of providing the tubular main body (4', 4a, 4b) and the auxiliary tube (20) comprises the sub-steps of:
- feeding a main tube (27) to a cutting station;
- cutting the main tube (27) at the cutting station for obtaining the tubular main body (4', 4a, 4b) and the auxiliary tube (20).

8. Method according to claim 7, wherein during the step of cutting at least one knife cuts the main tube (27); and
wherein during the step of distancing the knife distances the tubular main body (4', 4a, 4b) and the auxiliary tube (20) from one another.

9. Method according to claim 7 or 8, wherein during the step of cutting, the main tube (27) is cut at two distinct positions so as to obtain a first tubular main body (4a), a second tubular main body (4b) and the auxiliary tube (20);
wherein the auxiliary tube (20) comprises the first end portion (21) having the first opening and a second end portion (29) opposite to the first end portion (21) and having a second opening;
wherein during the step of forming, a respective active portion (23) of a first enlargement tool (24) is inserted through the first opening into the auxiliary tube (20) such that the first end portion (21) obtains an enlarged shape and a respective active portion (23) of a second enlargement tool (30) is inserted through the second opening into the auxiliary tube (20) so that the second end portion (29) obtains an enlarged shape;
wherein during the step of guiding, at least a first coupling portion (5') of the first tubular main body (4a) and at least a second coupling portion (5') of the second tubular main body (4b) are guided into the auxiliary tube (5') through respectively the first opening and the second opening;
wherein during the step of joining, the auxiliary tube (20) is joined to the first tubular main body (4a) and the second tubular main body (4b);
wherein the method further comprises a further step of cutting, during which the auxiliary tube (20) is cut.

10. Method according to claim 9, wherein during the step of widening, one or more active sections (25) are introduced into the auxiliary tube (20) so as to widen a first receiving portion (22) of the auxiliary tube (20) and a second receiving portion (22) of the auxiliary tube (20) opposed to the first receiving portion (22);
wherein during the step of guiding at least a first coupling portion (5') of the first tubular main body (4a) and at least a second coupling portion (5') of the second tubular main body (4b) are guided into respectively the first receiving portion (22) and the second receiving portion (22);
wherein during the step of joining, the first receiving portion (22) and the second receiving portion (22) are joined to respectively the first coupling portion (5') and the second coupling portion (5').

11. Method according to claim 9 or 10, wherein during the step of widening, a first active section (25) of a widening tool (26) is inserted into the auxiliary tube (20) through the first opening for widening a first receiving section (22) of the auxiliary tube (20) and a second active section (25) of the widening tool (26) is inserted into the auxiliary tube (20) through the second opening for widening the second receiving portion (22).

12. Method according to any one of the preceding claims, wherein the active portion (23) of the enlargement tool (24) is conically or frustoconically-shaped, so as to form the first end portion (22) into a frustoconical shape.

13. Method according to any one of the preceding claims further comprising a step of cooling, during which a cooling fluid is directed onto the auxiliary tube (20) and the tubular main body (4, 4a, 4b) after execution of the step of joining.

14. Method according to any one of the preceding claims, wherein the step of widening is executed after or before or simultaneously with respect to the step of forming.

15. Method according to any one of the preceding claims, further comprising a step of advancing, during which the tubular main body (4', 4a, 4b) and the auxiliary tube (20) are advanced along an advancement path to and through:
- a forming station at which the step of forming is executed;
- a guiding station at which the step of guiding is executed; and
- a joining station at which the step of joining is executed.

16. Drinking straw (1) for a package being filled with a pourable food product; wherein the drinking straw (1) is produced from a method according to any one of the preceding claims.

17. Straw making machine for producing drinking straws from a tubular main body (4', 4a, 4b) and an auxiliary tube (20) comprising at least a first end portion (21) having a first opening and a receiving portion (22) connected to the first end portion (21):
- a distancing device for distancing the tubular main body (4', 4a, 4b) and the auxiliary tube (20) from one another along a direction parallel to the longitudinal extensions of the tubular main body (4', 4a, 4b) and the auxiliary tube (20);
- an enlargement tool (24) having an active portion (23) configured to be inserted through a first opening of the auxiliary tube (20) into the auxiliary tube (20) such to enlarge and shape the first end portion (21); - a guiding device configured to guide a coupling portion (5') of the tubular main body (4', 4a, 4b) into the receiving portion (22) of the auxiliary tube (20); and
- a joining device configured to join the receiving portion (22) of the auxiliary tube (20) onto the coupling portion (5') of the tubular main body (4', 4a, 4b).

18. Straw making machine according to claim 17, wherein the enlargement tool (24) is arranged at a forming station, the guiding device is arranged at a guiding station and the joining device is arranged at a joining station;
wherein the straw making machine further comprises an advancement device configured to advance the tubular main body (4', 4a, 4b) and the auxiliary tube (20) along an advancement path from the cutting station to and through the enlargement station, the guiding station and the joining station.

19. Straw making machine according to claim 17 or 18, further comprising a widening tool (26) having an active section (25) configured to widen a receiving portion (22) of the auxiliary tube (20).
